# EUROPÄISCHE PATENTANMELDUNG

(11) **EP 1 270 139 A1**
(43) Veröffentlichungstag der Anmeldung: **02.01.2003**
(21) Anmeldenummer: 02011107.6
(22) Anmeldetag: 18.05.2002
(51) Int. Cl.: B23K 26/10, G02B 7/02

(54) **Scannervorrichtung für einen Leistungslaser**

(30) Priorität: 22.06.2001 DE 10130199
(71) Anmelder: Lödige Fördertechnik GmbH, 34414 Warburg (DE)
(72) Erfinder: Kienemund, Albrecht, Dr., 46119 Oberhausen (DE)
(74) Vertreter: Elbertzhagen, Otto, Dipl.-Ing.

(57) **Zusammenfassung**

Eine solche Scannervorrichtung, wie sie zur Materialbearbeitung erforderlich ist, hat eine Abbildungsoptik, mittels der der über einen Lichtwellenleiter eingeführte Laserstrahl als Spot auf die Bearbeitungsstellen einer Bearbeitungsfläche projizierbar ist. Die Abbildungsoptik hat eine Aufweitungsoptik mit einer ersten Linseneinheit sowie eine Fokussieroptik mit einer zweiten Linseneinheit. Um bei reduziertem Gewicht die Abdeckung größerer Bearbeitungsfelder bei einer hohen Fokussierbarkeit zu ermöglichen, ist die Abbildungsoptik der Scannervorrichtung in einem kardanisch aufgehängten Gestell angeordnet, innerhalb dessen der divergierende Laserstrahl mit mehrfacher Umlenkung in die erste Linseneinheit eingelenkt und der aufgeweitete Laserstrahl von der ersten Linseneinheit zu der zweiten Linseneinheit hin gerade durchgehend geführt ist.

## Beschreibung

Die Erfindung bezieht sich auf eine Scannervorrichtung für einen Leistungslaser zur Materialbearbeitung, wie Schweißen oder Schneiden, der im Gattungsbegriff des Patentanspruchs 1 näher bezeichneten Art.

Leistungslaser gewinnen in der Materialbearbeitung zunehmend an Bedeutung, hier kommen neben CO₂-Lasern insbesondere Yag-Laser zum Einsatz, wobei des darum geht, die Laserleistung an dem jeweiligen Bearbeitungsort zur Verfügung zu stellen. Dazu bieten sich Gelenkarmroboter an, die unter Verwendung von flexiblen Lichtwellenleitern in der Positionierung des Laserspots sehr flexibel sind. Allerdings ist es erforderlich, die Strahlqualität zu verbessern, die sich aus dem Produkt der Laserfleckgröße, die abhängig vom Laserspotradius ist, und aus der Divergenz, dem Spreizwinkel des Laserstrahlbündels, ergibt. Die bekannten Scannervor richtungen, die auch als Strahlführungssysteme zu bezeichnen sind, ermöglichen nur sehr kurze Arbeitsabstände und damit kleine Bearbeitungsfelder, weshalb sie für den maschinellen Einsatz insbesondere an dem Gelenkarm eines Roboters nicht geeignet sind.

Die Strahlführungseinrichtung setzt da an, wo die Laserstrahlung, insbesondere die eines Yag-Lasers, aus dem vom Laser kommenden Lichtwellenleiter austritt. Bei einem solchen Lichtwellenleiter handelt es sich um eine Stufenindexfaser, deren Stirnende die Austrittsfläche für die Laserstrahlung bildet. In praktischer Ausführung hat die Austrittsfläche einen Durchmesser von 0,4 mm, hierbei beträgt der Divergenzwinkel der Laserstrahlung etwa 75 mrad. Für einfache Anwendungen wird die Austrittsfläche des Lichtwellenleiters über eine Fokussieroptik unmittelbar auf dem Bearbeitungsort abgebildet. Hierbei kann die Spotgröße durch eine Vario-Optik, wie einem Zoom, variiert werden. Allerdings haben die bekannten Strahlführungssysteme relativ große Massen, weshalb die dynamischen Eigenschaften beim Verfahren des Spots eingeschränkt und infolgedessen schnelle Lageänderungen mit hoher Positioniergenauigkeit nicht realisierbar sind.

Man hat deshalb schon Scannervorrichtungen der gattungsbildenden Art geschaffen, die zusätzlich zu der Zustellbewegung der die Scannervorrichtung tragenden Transportvorrichtung, wie einem Robotergelenkarm, eine überlagerte Führung des Laserspots ermöglichen. Bei solchen Scannervorrichtungen wird das divergente Strahlbündel des Lasers am Austrittsende des Lichtwellenleiters über die Aufweitungsoptik auf einen relativ großen Strahlquerschnitt gebracht. Bei großen Strahlquerschnitten ist die Divergenz vernachlässigbar klein, folglich verläuft der Laserstrahl ab dem Austritt aus der Aufweitungsoptik im wesentlichen parallel. Nach dem Verlassen der Aufweitungsoptik trifft der Laserstrahl auf Ablenkspiegel, die ihn in zwei zueinander senkrechten Richtungen ablenken. Hierzu werden meist Galvanometerspiegel benutzt, die entsprechend zwischen der Aufweitungsoptik und der Fokussieroptik angeordnet sind. Mit der Galvanometerablenkung können bei hoher Spotgeschwindigkeit gute Positioniergenauigkeiten erreicht werden, der Nachteil liegt allerdings darin, daß das Strahlenbündel über das optische System innerhalb der Abbildungsoptik bewegt wird.

Wegen der schlechten Strahlqualität der Yag-Laser muß der Laserstrahl in hohem Maße aufgeweitet werden und auf eine langbrennweitige Abbildungsoptik treffen, um einen großen Arbeitsabstand von der Austrittsöffnung der Scannervorrichtung, der Apertur, zu ermöglichen. Die maximal mögliche Aufweitung des Laserstrahls wird bei den bekannten Scannervorrichtungen der vorbeschriebenen Art durch die Galvanospiegel und durch die Scanneroptik begrenzt. Damit fällt bei kleinen Spots die mögliche Bearbeitungsfläche sehr klein aus, oder es wird der Spotdurchmesser zu groß, wodurch solche Scannervorrichtungen insbesondere für das Remote-Welding an Einsatzattraktivität verlieren. Außerdem hat die Scanneroptik mit den Galvanospiegeln ein hohes Gewicht, was den Einsatz am Gelenkarm eines Roboters erschwert.

Der Erfindung liegt deshalb die Aufgabe zugrunde, eine Scannervorrichtung der eingangs genannten Art zu schaffen, die bei reduziertem Gewicht die Abdeckung größerer Bearbeitungsfelder bei einer hohen Fokussierbarkeit, also einem kleinen Spotdurchmesser, ermöglicht.

Diese Aufgabe wird bei einer Scannervorrichtung der gattungsbildenden Art durch die kennzeichnenden Merkmale des Patentanspruchs 1 gelöst.

Für die Erfindung ist wesentlich, daß auf Galvano-Spiegeleinheiten und aufwendige Scanneroptiken verzichtet werden kann und trotzdem ein großer Arbeitsabstand erzielt wird. Die neue Scannervorrichtung benötigt nur sehr wenige optische Elemente, wodurch der Energieverlust der Laserstrahlung minimiert wird. Hierdurch reduziert sich zudem der Kühlungsaufwand. Letztlich ist durch den gesamten Aufbau die Masse der erfindungsgemäßen Scannervorrichtung gegenüber Systemen mit vergleichbarer Leistung erheblich reduziert.

Vorteilhafte Ausgestaltungsmerkmale der Erfindung ergeben sich aus den Unteransprüchen.

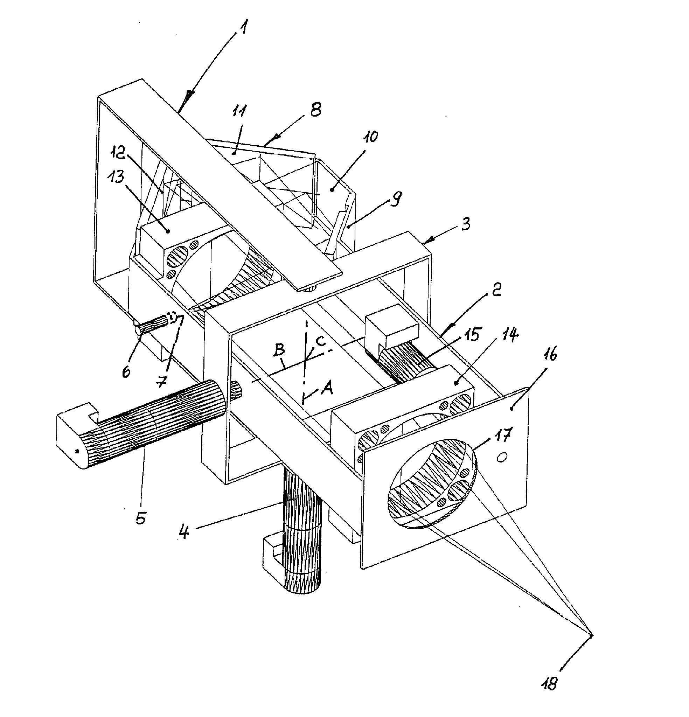

Die Erfindung wird nachfolgend anhand der Zeichnung an einem Ausführungsbeispiel noch näher erläutert. Die Zeichnung zeigt in schematischer, perspektivischer Darstellung eine Scannervorrichtung für einen Leistungslaser.

Im einzelnen erkennt man in der Zeichnung ein Grundgestell 1, über das die gesamte Scannervorrichtung an einer Zustell- oder Positioniervorrichtung, wie dem Gelenkarm eines Roboters, angeordnet wird. An dem Grundgestell 1 ist ein Gestell 2 für eine Abbildungsoptik gelagert, und zwar mittels einer kardanischen Aufhängung. Hierzu ist das Gestell 2 innerhalb eines Gestellrahmens 3 schwenkbar angeordnet, welcher relativ zum Grundgestell 1 um eine erste Drehachse A geschwenkt werden kann. Dazu dient eine Antriebseinheit 4, die aus einem Motor und einem Getriebe besteht. Im Gestellrahmen 3 ist das Gestell 2 für die Abbildungsoptik um eine Drehachse B schwenkbar aufgehängt, wobei diese zweite Drehachse B senkrecht auf der ersten Drehachse A steht. Die beiden Drehachsen A, B kreuzen sich in einem Schnittpunkt C, der im Mittelpunkt des Gestellrahmens 3 liegt. Für die Verschwenkung des Gestells 2 ist eine weitere Antriebseinheit 5 vorhanden, die ebenso wie die Antriebseinheit 4 einen Motor und ein Getriebe aufweist.

In den vom Gestell 2 umschlossenen Innenraum ist von einer Längsseite her ein Lichtwellenleiter 6 eingeführt, der von einem in der Zeichnung nicht dargestellten Laser, vorzugsweise einem Yag-Laser kommt. An der Innenseite der betreffenden Längsseite des Gestells 2 liegt das Austrittsende 7 für den Laserstrahl, der von hier aus das Gestell 2 bis zur gegenüberliegenden Längsseite durchquert und dort auf einen Umlenkspiegel 8 trifft, der sich beim Ausführungsbeispiel aus vier Einzelspiegeln 9-12 zusammensetzt. Der divergierende Laserstrahl wird aus der Ursprungsrichtung um 270° durch den Umlenkspiegel 8 umgelenkt und in eine erste Linseneinheit 13 eingelenkt, die zusammen mit dem Umlenkspiegel 8 eine Aufweitungsoptik darstellt.

Der aufgeweitete Laserstrahl verläßt die erste Linseneinheit 13 als paralleles Strahlenbündel, welches in Längsrichtung des Gestells 2 auf unmittelbarem Wege, also ohne Umlenkung oder sonstige Beeinflussung, auf eine zweite Linseneinheit 14 auftrifft, bei der es sich um eine Fokussieroptik handelt. In bevorzugter Ausführung ist diese Fokussieroptik als Vario-Optik ausgebildet, und dazu ist die zweite Linseneinheit 14 in Strahlrichtung des aufgeweiteten Laserstrahls relativ zur ersten Linseneinheit 13 innerhalb des Gestells 2 verschieblich. Für die Verschiebung der zweiten Linseneinheit 14 ist wiederum eine Antriebseinheit 15 vorgesehen, die aus einem Motor und aus einem Getriebe besteht.

Die zweite Linseneinheit 14 ist benachbart einer Frontplatte der Scannervorrichtung angeordnet, die eine Laserstrahlaustrittsöffnung 17, eine sogenannte Apertur, von erheblichem Durchmesser aufweist. Dies macht deutlich, daß an der Austrittsseite der zweiten Linseneinheit 14 der hoch aufgeweitete Laserstrahl mittels langer Brennweite der Abbildungsoptik fokussiert wird und an dem betreffenden Bearbeitungsort einen Spot 18 von hoher Strahlungsintensität ergibt. Die lange Brennweite der Abbildungsoptik ermöglicht einen großen Arbeitsabstand zwischen der Apertur 17 und der Bearbeitungsstelle, an der der Spot 18 gebildet wird.

Zum einen kann mit der dargestellten Scannervorrichtung über die als Variooptik ausgeführte zweite Linseneinheit 14 durch Verschiebung über die Antriebseinheit 15 relativ zur ersten Linseneinheit 13 der Spot in Strahlrichtung in seiner Lage verändert werden, was eine Anpassung an die Topografie des Bearbeitungsfeldes ermöglicht. Zum zweiten ist über die kardanische Aufhängung des Gestells 2 für die Abbildungsoptik über die Antriebseinheiten 4 und 5 eine hohe Spotgeschwindigkeit und eine gute Positioniergenauigkeit des Spots 18 auf dem Bearbeitungsfeld realisierbar.

Für die Massenverteilung ist es von Vorteil, daß der Schnittpunkt C der beiden Drehachsen A und B für die kardanische Verstellung etwa auf der Mitte zwischen der ersten Linseneinheit 13 und der zweiten Linseneinheit 14 liegt. Weiter ist es für eine Minimierung der Baugröße der Scannervorrichtung wichtig, daß das Austrittsende 7 des Lichtwellenleiters 6 sich zwischen der ersten Linseneinheit 13 und der zweiten Linseneinheit 14 befindet, wobei die Strahlrichtung des divergierenden Strahls zwischen dem Austrittsende 7 des Lichtwellenleiters 6 und dem ersten Einzelspiegel 9 quer zur Strahlrichtung des aufgeweiteten Strahls zwischen den Linseneinheiten 13, 14 verläuft. Durch die erwähnte Umlenkung des divergierenden Strahls um 270° um die erste Linseneinheit 13 herum kann ein längstmöglicher Weg zur Nutzung der Divergenz des in den Innenraum des Gestells 2 eingeführten Laserstrahls zwecks dessen hoher Aufweitung genutzt werden.

## Patentansprüche

1. Scannervorrichtung für einen Leistungslaser zur Materialbearbeitung, wie Schweißen oder Schneiden, mit einer Abbildungsoptik, mittels der der über einen Lichtwellenleiter eingeführte Laserstrahl als Spot auf die Bearbeitungsstellen einer Bearbeitungsfläche projizierbar ist und die eine Aufweitungsoptik mit einer ersten Linseneinheit sowie eine Fokussieroptik mit einer zweiten Linseneinheit hat,
**dadurch gekennzeichnet,**
**daß** die Abbildungsoptik (8-14) in einem kardanisch aufgehängten Gestell (2) angeordnet ist, innerhalb dessen der divergierende Laserstrahl mit mehrfacher Umlenkung in die erste Linseneinheit (13) eingelenkt und von der ersten Linseneinheit (13) zu der zweiten Linseneinheit (14) hin der aufgeweitete Laserstrahl gerade durchgehend geführt ist.

2. Scannervorrichtung nach Anspruch 1,
**dadurch gekennzeichnet,**
**daß** die kardanische Aufhängung des Gestells (2) senkrecht zueinander stehende Drehachsen (A, B) aufweist, die sich an einem Punkt (C) kreuzen, der zwischen der ersten Linseneinheit (13) und der zweiten Linseneinheit (14) liegt, wobei die von den beiden Drehachsen (A, B) aufgespannte Ebene senkrecht zur Strahlrichtung zwischen den beiden Linseneinheiten (13, 14) liegt.

3. Scannervorrichtung nach Anspruch 1 oder 2,
**dadurch gekennzeichnet,**
**daß** bei entsprechender Anordnung des Lichtwellenleiter-Austrittsendes (7) der Laserstrahl zwischen der ersten Linseneinheit (13) und der zweiten Linseneinheit (14) quer zur Strahlrichtung des aufgeweiteten Laserstrahls zwischen diesen beiden Linseneinheiten (13, 14) eingeführt und über Umlenkspiegel (8-12) an der von der zweiten Linseneinheit (14) abliegenden Seite in die erste Linseneinheit (13) eingelenkt ist.

4. Scannervorrichtung nach Anspruch 3,
**dadurch gekennzeichnet,**
**daß** die Umlenkspiegel (8-12) an der dem Austrittsende (7) des Lichtwellenleiters (6) gegenüberliegenden Seite des Gestells (2) angeordnet sind und eine Mehrfachumlenkung des Laserstrahls bewirken.

5. Scannervorrichtung nach einem der Ansprüche 1 - 4,
**dadurch gekennzeichnet,**
**daß** die zweite Linseneinheit (14) als Vario-Optik ausgebildet und entsprechend in Strahlrichtung des aufgeweiteten Laserstrahlsrelativ zur ersten Linseneinheit (13) verschieblich ist.
